Europäisches Patentamt

European Patent Office

Office européen des brevets

(19)

(11) Numéro de publication: **0 370 891**

**A1**

(12)

# DEMANDE DE BREVET EUROPEEN

(21) Numéro de dépôt: 89403200.2

(22) Date de dépôt: 21.11.89

(51) Int. Cl.5: **H01P 7/06, H05B 6/78, G01J 5/00**

(30) Priorité: 25.11.88 FR 8815875

(43) Date de publication de la demande:
30.05.90 Bulletin 90/22

(84) Etats contractants désignés:
CH DE GB IT LI

(71) Demandeur: Centre Technique Industriel dit:
INSTITUT TEXTILE DE FRANCE
280, avenue Aristide Briand B.P. 141
F-92223 Bagneux Cédex(FR)

Demandeur: CENTRE NATIONAL DE LA
RECHERCHE SCIENTIFIQUE
15, quai Anatole France
F-75007 Paris(FR)

(72) Inventeur: Dubus, Gérard
256, rue Montgolfier

F-59100 Roubaix(FR)
Inventeur: Rouvillain, Jean-Pierre Résidence
Armenonville
115, boulevard du Général de Gaulle
F-59100 Roubaix(FR)
Inventeur: Sainson, Jean-Claude
17, rue Cugnot
F-59100 Roubaix(FR)
Inventeur: Leroy, Yves
80, rue G. Baratte
F-59650 Villeneuve d'Ascq(FR)
Inventeur: Van de Velde, Jean-Claude
Résidence Europe 07/233
F-59370 Mons en Baroeul(FR)

(74) Mandataire: Descourtieux, Philippe et al
CABINET BEAU de LOMENIE 55 rue
d'Amsterdam
F-75008 Paris(FR)

(54) **Dispositif de propagation des micro-ondes pour matériau plan en défilement, notamment textile.**

(57) Selon l'invention, le dispositif comprend un guide d'onde rectangulaire, fonctionnant selon le mode TE01, terminé par deux courts-circuits fixes (7), le guide et les courts-circuits sont en deux tronçons distincts (2, 3), correspondant à une coupe selon le plan médian des deux grandes faces; les deux tronçons (2,3) sont maintenus en position en regard l'un de l'autre avec un écartement (e) rendant possible le passage d'un matériau plan (4) sur toute la largeur du guide ; un moyen de couplage magnétique est monté sur l'une des extrémités du tronçon (2) et relié à un récepteur ou à un générateur de micro-ondes.

De préférence le couplage est réalisé à l'aide d'un fil conducteur rigide (5) dont la partie intérieure (8) au guide a la forme d'une boucle.

Lorsque le moyen de couplage est relié à un récepteur de micro-ondes , le dispositif s'applique en particulier à la mesure de la température du matériau plan. Lorsqu'il est relié à un générateur , le dispositif s'applique en particulier au séchage.

Fig-1

# DISPOSITIF DE PROPAGATION DES MICRO-ONDES POUR MATERIAU PLAN EN DEFILEMENT, NOTAMMENT TEXTILE

La présente invention concerne la propagation des micro-ondes. Elle concerne plus particulièrement un dispositif comprenant un guide d'ondes à travers lequel peut se déplacer un matériau plan. Un tel dispositif peut avoir des applications dans le traitement du matériau plan, par exemple séchage d'un matériau humide, par l'action des micro-ondes traversant le guide et appliquées sur le matériau. Il peut aussi avoir des applications où à l'inverse les micro-ondes traversant le guide sont émises par le matériau, par exemple la mesure de la température du matériau. Il peut enfin avoir des applications basées sur la mesure de son coefficient de transmission , notamment la mesure de l'humidité ou la détection de discontinuités du matériau traversant ledit dispositif.

On connaît par le brevet FR.A.2.372.479 un dispositif de chauffage par l'action des micro-ondes à travers lequel peut se déplacer un matériau plan. Dans ce dispositif connu, le matériau passe à travers six cavités résonnantes, du type H101, fendues transversalement. Des boucles de couplage, montées de manière axiale dans chaque cavité, permettent d'assurer le couplage inductif du guide d'onde et de la cavité résonnante correspondante. Ce dispositif nécessite de nombreuses cavités en cas de matériaux larges ; de plus la longueur de la cavité résonnante est nécessairement un nombre entier de la demi-longueur d'onde, ce qui est une contrainte de construction et un inconvénient pour le traitement de matériaux de largeur variable.

Par ailleurs on connaît par le brevet FR.A.2.572.176 un dispositif de propagation des micro-ondes, appliqué à la mesure de la température d'un matériau plan en défilement notamment textile, qui ne comprend pas de cavités résonnantes. Selon un mode de réalisation, le dispositif comprend un guide rectangulaire, fonctionnant selon le mode TE01, qui est fendu selon deux ouvertures destinées à laisser passer le matériau et pratiquées sensiblement le long du plan passant par le milieu des grandes faces du guide. Le guide d'onde est relié à un récepteur amplificateur capable de mesurer l'émissivité du matériau séjournant dans le guide. Dans l' exemple décrit l'extrémité du guide, opposé au récepteur amplificateur, est fermée par un court-circuit mobile.

Ce dispositif connu par le brevet NO FR.A.2.572.176 présente des inconvénients. Dans le domaine de la mesure de température de matériaux textiles , il est le plus souvent destiné à être installé sur une rame de séchage ou de thermofixation. Dans une telle installation, le matériau textile est généralement maintenu tout au long de son parcours par des picots ou des pinces supportés par des chaînes métalliques. Il n'est pas possible de faire passer les picots ou les pinces et les chaînes métalliques à travers les fentes pratiquées dans le guide rectangulaire, sous peine de perturber la propagation des micro-ondes dans le guide. D'autre part il est nécessaire d'avoir un guide d'onde dont la longueur totale soit nettement supérieure à la laize du matériau en défilement.

Or on a trouvé et c'est ce qui fait l'objet de l'invention un dispositif pour la propagation des micro-ondes qui pallie les inconvénients précités. Ce dispositif est du type connu en ce qu'il comprend un guide d'onde rectangulaire , fonctionnant selon le mode TE01. Selon l'invention, le guide d'onde est terminé par deux courts-circuits fixes ; le guide et les deux courts-circuits sont en deux tronçons distincts, correspondant à une coupe selon le plan médian des deux grandes faces du guide et qui sont maintenus en position en regard l'un de l'autre avec un écartement rendant possible le passage d'un matériau plan sur toute la longueur du guide ; de plus le dispositif comporte un moyen de couplage magnétique monté sur l'une des extrémités de l'un des tronçons.

Ainsi selon l'invention, le guide d'onde est en deux parties distinctes dont la première est positionnée d'un côté du matériau plan et la seconde de l'autre côté du matériau plan en regard de la première. Cette configuration particulière permet de placer le dispositif sur une rame textile dans la zone du matériau qui est au-delà des picots ou des pinces, et quelle que soit la largeur du matériau.

De préférence le moyen de couplage magnétique consiste en un fil conducteur rigide, pénétrant par l'un des courts-circuits dans l'un des deux tronçons du guide d'onde et dont la partie située à l'intérieur du guide est recourbée en forme de boucle.

Dans une version préférée, le fil conducteur pénètre dans le tronçon suivant l'axe longitudinal de symétrie dudit tronçon ; la partie formant boucle est recourbée vers le court-circuit suivant un arc de cercle compris entre 270° et 360°.

Avantageusement la boucle est sensiblement dans un plan qui fait un angle de l'ordre de 45° avec les grandes faces du guide.

Le moyen de couplage magnétique est couplé à un récepteur amplificateur , dans le cas où l'utilisation du dispositif est basée sur la mesure de l'émissivité dans la gamme des micro-ondes, des matériaux en défilement.

Le moyen de couplage magnétique est couplé à un générateur de micro-ondes, dans le cas où l'utilisation du dispositif est basée sur l'action des micro-ondes sur le matériau en défilement. Dans l'application ayant trait à la mesure de l'humidité ou la détection de discontinuités du matériau passant entre les deux tronçons du dispositif , celui-ci comporte un premier moyen de couplage magnétique monté à une première extrémité d'un tronçon du guide et couplé à un générateur de micro-ondes et un second moyen de couplage magnétique monté à la seconde extrémité du même ou de l'autre tronçon du guide et couplé à un récepteur amplificateur.

L'invention sera mieux comprise grâce à la description qui va être faite d'un mode de réalisation du dispositif de propagation en deux éléments distincts et à couplage magnétique, illustré par le dessin annexé dans lequel :

La figure 1 est une vue schématique en perspective du dispositif

La figure 2 est une vue schématique partielle en coupe selon le plan médian des petites faces du guide

La figure 3 est une vue de côté de la transition guide d'onde/coaxial.

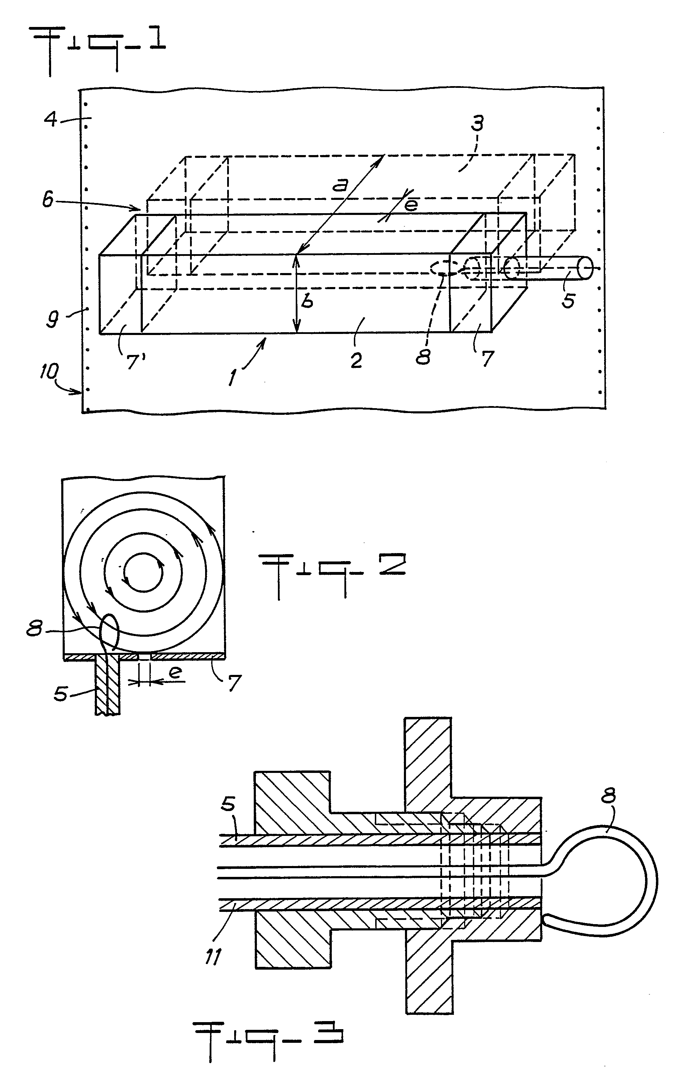

Le dispositif 1 de propagation des micro-ondes de l'invention comporte deux éléments distincts 2 et 3 ayant la forme d'un parallélépipède rectangle de mêmes dimensions, placés d'un côté et de l'autre du matériau plan 4 en défilement continu. Le premier élément 2 , en trait plein sur la figure 1, est relié par un coaxial 5 soit à un récepteur amplificateur, soit à un générateur de micro-ondes, suivant l'application concernée.

Les deux éléments 2 et 3 sont positionnés en regard l'un de l'autre par des moyens non représentés, laissant entre eux un espace libre 6 d'une même largeur e , suffisante pour permettre le passage du matériau plan 4.

L'ensemble consistant dans le premier élément 2, l'espace intermédiaire 6 et le second élément 3 constitue un guide d'onde rectangulaire , fonctionnant selon le mode TE01, dont le petit côté b correspond à la hauteur d'un élément et dont le grand côté a correspond à la somme des largeurs des deux éléments 2,3 et de la largeur e de l'espace libre 6.

Les parties extrêmes des deux éléments 2,3 sont terminées par des courts-circuits 7 , 7' fixes.

La transition entre le guide d'onde et le coaxial 5 est obtenue par couplage magnétique. Comme cela est montré à la figure 2, le coaxial 5 qui est un fil conducteur rigide traverse le court-circuit et pénètre dans le premier élément 2, où il forme une boucle 8.

On a représenté sur la figure 2 les lignes de champ magnétique dans le guide d'onde selon le mode de propagation TE01. Pour réaliser la boucle 8, l'extrémité du coaxial 5 est repliée en forme d'arc de cercle dans un plan qui forme avec les grandes faces correspondant au grand côté a du guide un angle compris entre 40 et 90°. En première approximation, le couplage est basé sur le même principe de fonctionnement que celui d'un transformateur, les lignes de champ magnétique passant à travers la boucle 8. On comprend , au vu de la figure 2 , que le couplage magnétique peut être réalisé dans de bonnes conditions en plaçant la boucle 8 en décalage par rapport au plan médian des grandes faces du guide, et qu'ainsi la fente pratiquée dans le guide selon ce plan médian ne gêne pas le couplage.

Dans sa liaison vers le récepteur amplificateur ou le générateur micro-ondes, le coaxial 5 est entouré d'une gaine 11 de téflon.

Dans un exemple précis de réalisation, le grand côté a du guide était de 22,5mm , le petit côté b de 10mm , la largeur e de l'espace libre 6 entre les deux éléments 2 et 3 de 2,5mm, la longueur des deux éléments de 41cm , la boucle 8 avait un diamètre de l'ordre de 1 cm, et le plan de la boucle faisait un angle de 45° avec la grande face du guide. L'entrée du coaxial 5 dans le premier élément 2 correspondait à l'axe de symétrie dudit élément , et l'extrémité libre de la boucle 8 affleurait le court-circuit 7 dans une zone comprise entre l'espace libre 6 et le plan parallèle aux petites faces du guide et passant par le coaxial 5. Le couplage obtenu dans cette réalisation est particulièrement efficace , car le coefficient de réflexion est en moyenne de-10 dB sur une bande passante de 1,2GHz et de -12dB sur une bande passante de 0,5GHz.

Le dispositif 1, relié à un récepteur amplificateur , a été mis en place sur une rame textile pour la mesure de la température d'un tissu 4. Le tissu était maintenu en largeur par des picots métalliques 9 piqués dans les zones latérales 10 du tissu correspondant aux lisières. Du fait de sa structure en deux éléments 2 et 3 distincts , positionnables de part et d'autre du tissu 4, le dispositif 1 peut être placé à l'intérieur ou immédiatement à la sortie de l'enceinte thermique de la rame, là où le tissu 4 est maintenu par les picots 9.

On comprend que le dispositif 1 permet de s'affranchir de la largeur du matériau 4; bien sûr les bruits thermiques transmis au récepteur correspondent alors à ceux émis par la partie du matériau contenue dans l'espace libre 6 entre les deux éléments 2 et 3 du guide d'onde.

La juxtaposition de plusieurs dispositifs 1 ayant des longueurs différentes , installés perpendiculairement au sens de défilement du matériau , permet de déterminer un éventuel gradient de température sens travers du matériau. Dans le cas de plusieurs dispositifs montés sur une même installation , ceux-ci peuvent être reliés à un seul récepteur amplificateur, muni d'un commutateur , qui relie successivement et cycliquement les différents dispositifs 1 au récepteur. Un calculateur relié au récepteur amplificateur permet de déceler l'existence et de quantifier les écarts de température existant entre les différentes zones transversales du matériau.

L'invention n'est pas limitée au seul mode de réalisation décrit ci-dessus et donné à titre d'exemple non exhaustif . Elle en couvre toutes les variantes . En particulier le dispositif peut être relié à un générateur de micro-ondes et être utilisé pour obtenir une action homogène et optimale des micro-ondes sur le matériau en défilement.

Dans une autre version, le dispositif est couplé par une première boucle de couplage à un récepteur amplificateur,comme cela a été décrit ci-dessus , et par une seconde boucle de couplage à un générateur de micro-ondes. La seconde boucle de couplage est identique à la première et est montée sur le court-circuit 7′ terminant la partie extrême de l'élément 2, opposée à celle qui est équipée de la première boucle 8 de couplage. Dans cette version, le générateur envoie, par l'intermédiaire de la seconde boucle 8 de couplage, des micro-ondes qui se propagent dans le guide qui sont captées par le récepteur amplificateur. Le guide a un certain coefficient de transmission . Le passage du matériau plan, en particulier lorsqu'il est humide ou qu'il présente des discontinuités , affecte la valeur du coefficient de transmission. Ainsi le signal transmis au récepteur est fonction de l'humidité du matériau ou des discontinuités qu'il présente.

## Revendications

1. Dispositif de propagation des micro-ondes du type comprenant un guide d'onde rectangulaire fonctionnant selon le mode TE01, caractérisé en ce que, le guide d'onde étant terminé par deux courts-circuits fixes, le guide d'onde et les deux courts-circuits (7) sont en deux tronçons distincts (2, 3), correspondant à une coupe selon le plan médian des deux grandes faces du guide et qui sont maintenus en position en regard l'un de l'autre avec un écartement (e) rendant possible le passage d'un matériau plan (4) sur toute la longueur du guide, et en ce qu'il comporte un moyen de couplage magnétique monté sur l'une des extrémités de l'un des tronçons (2 ou 3) et relié à un récepteur ou à un générateur de micro-ondes.

2. Dispositif selon la revendication 1 caractérisé en ce que le moyen de couplage magnétique consiste en un fil conducteur rigide (5), pénétrant par l'un des courts-circuits (7) dans l'un (2) des deux tronçons du guide d'onde et dont la partie (8) située à l'intérieur du guide est recourbée en forme de boucle.

3. Dispositif selon la revendication 2 caractérisé en ce que le fil conducteur ( 5) pénètre dans le tronçon (2) suivant l'axe longitudinal de symétrie dudit tronçon (2) ; et en ce que la partie (8) formant boucle est recourbée vers le court-circuit (7) suivant un arc de cercle compris entre 270° et 360°.

4. Dispositif selon l'une des revendications 2 ou 3 caractérisé en ce que la boucle (8) est sensiblement dans un plan qui fait un angle de l'ordre de 45° avec les grandes faces du guide.

5. Dispositif selon l'une des revendications 1 à 4 caractérisé en ce qu'il comporte un premier moyen de couplage magnétique monté sur une première extrémité d'un tronçon (2) et relié à un récepteur de micro-ondes, et un second moyen de couplage magnétique monté sur la seconde extrémité, du même (2) ou de l'autre (3) tronçon et relié à un générateur de micro-ondes.

6. Application du dispositif selon la revendication 1 à la mesure de la température d'un matériau plan en défilement caractérisée en ce que, le moyen de couplage magnétique étant relié à un récepteur amplificateur de micro-ondes, on mesure l'émissivité du matériau (4) pendant son séjour dans l'espace libre entre les deux tronçons (2,3).

7. Application selon la revendication 6 à la mesure du gradient de température sens travers d'un matériau plan en défilement caractérisée en ce que le matériau passe successivement dans des espaces libres d'une juxtaposition de plusieurs dispositifs (1) de longueurs différentes .

8. Application du dispositif selon la revendication 5 à la mesure de l'humidité du matériau plan en défilement caractérisée en ce qu'on mesure le coefficient de transmission du guide d'onde traversé par le matériau plan.

Fig-1

Fig-2

Fig-3

Office européen des brevets

**RAPPORT DE RECHERCHE EUROPEENNE**

Numero de la demande

EP 89 40 3200

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 372 459 (HOECHST AG)<br>* Page 13, lignes 9-16; page 14, lignes 16-22,29-32; figures * | 1-4 | H 01 P 7/06<br>H 05 B 6/78<br>G 01 J 5/00 |
| Y | | 5,6,8 | |
| A | GB-A-1 171 621 (RADYNE)<br>* En entier * | 2-4 | |
| Y | ELEKTROTECHNIK UND MASCHINENBAU, vol. 93, no. 9, septembre 1976, pages 371-378, Vienna, AT; E. BONEK: "Industrielle Anwendungen von Mikrowellen"<br>* En entier * | 5,8 | |
| D,Y | FR-A-2 572 176 (INSTITUT TEXTILE DE FRANCE et al.)<br>* En entier * | 6 | |
| A | FR-A-2 483 970 (ANVAR)<br>* Figures * | 7 | |

**DOMAINES TECHNIQUES RECHERCHES (Int. Cl.5)**

H 01 P
H 05 B

Le présent rapport a été établi pour toutes les revendications

| Lieu de la recherche | Date d'achèvement de la recherche | Examinateur |
|---|---|---|
| LA HAYE | 19-02-1990 | LAUGEL R.M.L. |

EPO FORM 1503 03.82 (P0402)